# EUROPEAN PATENT APPLICATION

(11) **EP 4 294 071 A1**
(43) Date of publication of application: **20.12.2023**
(21) Application number: 22774289.7
(22) Date of filing: 23.03.2022
(51) Int. Cl.: H04W 24/02

(54) **SCG STATE CONTROL METHOD AND APPARATUS, DEVICE, AND READABLE STORAGE MEDIUM**

(30) Priority: 23.03.2021 CN 202110310339
(71) Applicant: Vivo Mobile Communication Co., Ltd., Dongguan, Guangdong 523863 (CN)
(72) Inventor: PU, Wenjuan, Dongguan, Guangdong 523863 (CN); YANG, Xiaodong, Dongguan, Guangdong 523863 (CN)
(74) Representative: Murgitroyd & Company
(86) International application number: PCT/CN2022/082567
(87) International publication number: WO 2022/199634

(57) **Abstract**

This application discloses a method and apparatus for controlling a status of an SCG, a device, and a readable storage medium, and belongs to the technical field of communications. The method of the examples of this application includes: at the same time as or after a terminal sends first information to a network side, performing, by the terminal, a first operation, the first information being used for requesting activation of the SCG.

## Description

### CROSS-REFERENCE TO RELATED APPLICATION

This application claims priority to Chinese Patent Application No. 202110310339.1 filed on March 23, 2021, which is incorporated herein by reference in its entirety.

### TECHNICAL FIELD

This application belongs to the technical field of communications, and particularly relates to a method and apparatus for controlling a status of a secondary cell group (Secondary Cell Group, SCG), a device, and a readable storage medium.

### BACKGROUND

When an SCG is in a deactivated status, a terminal does not monitor a physical downlink control channel (Physical Downlink Control Channel, PDCCH) and transmit a physical uplink shared channel (Physical Uplink Shared Channel, PUSCH). When there is uplink data on the terminal to be sent on the SCG when the SCG is in the deactivated status, the terminal may request a network side to activate the SCG through a master cell group (Master Cell group, MCG)/SCG. After the terminal sends an SCG activating request, the request of the terminal may be accepted or rejected by the network side.

At present, at the same time as or after the terminal sends the activating request, the behavior of the terminal is still unclear, which will cause that the terminal cannot correctly receive the response of the network side to the SCG activating request, thus resulting in incapability of setting the SCG in an appropriate status by the terminal, possibly thereby further increasing the power consumption of the terminal and the activating time of the SCG. In addition, when the SCG activating request is not responded or is rejected by the network side, the terminal may send the SCG activating request frequently, leading to waste of network resources.

### SUMMARY

The example of this application provides a method and apparatus for controlling a status of an SCG, a device and a readable storage medium, which solves the problem that which behavior of the terminal is performed at the same as or after the terminal sends an SCG activating request.

In a first aspect, a method for controlling a status of an SCG is provided, the method including:
at the same time as or after a terminal sends first information to a network side, performing, by the terminal, a first operation, the first information being used for requesting activation of the SCG,
where the first operation includes at least one of the following:
   keeping a deactivated status of the SCG;
   setting the SCG to be in the deactivated status;
   monitoring scheduling of a secondary node SN;
   activating the SCG;
   receiving second information sent by the network side, the second information being used for responding to the first information;
   starting a first timer, where when the first timer is running, the terminal does not send an SCG activating request or the first information; and
   starting or restarting a second timer, where when the second timer is running, the terminal monitors the scheduling of the SN or sets the SCG to be in an activated status.

In a second aspect, an apparatus for controlling a status of an SCG is provided. The apparatus is applied to a terminal, including:
an execution module, configured to, at the same time as or after the terminal sends first information to a network side, perform a first operation, the first information being used for requesting activation of the SCG,
where the first operation includes at least one of the following:
   keeping a deactivated status of the SCG;
   setting the SCG to be in the deactivated status;
   monitoring scheduling of a secondary node SN;
   activating the SCG;
   receiving second information sent by the network side, the second information being used for responding to the first information;
   starting a first timer, where when the first timer is running, the terminal does not send an SCG activating request or the first information; and
   starting or restarting a second timer, where when the second timer is running, the terminal monitors the scheduling of the SN or sets the SCG to be in an activated status.

In a third aspect, a terminal is provided. The terminal includes a processor, a memory, and a program or an instruction stored in the memory and executable on the processor, where when the program or the instruction is executed by the processor, the steps of the method in the first aspect are implemented.

In a fourth aspect, a terminal is provided, including a processor and a communication interface, where the processor is configured to, at the same time as or after the terminal sends first information to a network side, perform a first operation, the first information being used for requesting activation of the SCG,
where the first operation includes at least one of the following:
keeping a deactivated status of the SCG;
setting the SCG to be in the deactivated status;
monitoring scheduling of a secondary node SN;
activating the SCG;
receiving second information sent by the network side, the second information being used for responding to the first information;
starting a first timer, where when the first timer is running, the terminal does not send an SCG activating request or the first information; and
starting or restarting a second timer, where when the second timer is running, the terminal monitors the scheduling of the SN or sets the SCG to be in an activated status.

In a fifth aspect, a readable storage medium is provided. The readable storage medium stores a program or an instruction, where when the program or the instruction is executed by a processor, the steps of the method in the first aspect are implemented.

In a sixth aspect, a chip is provided. The chip includes a processor and a communication interface, where the communication interface is coupled to the processor, and the processor is configured to execute a program or an instruction to implement the steps of the method in the first aspect.

In a seventh aspect, a computer program/program product is provided, where the computer program/program product is stored in a non-volatile storage medium, the program/program product being executed by at least one processor to implement the steps of the method in the first aspect.

In the example of this application, the terminal may acquire the response of the network side at the same time as or after the terminal sends the SCG activating request, so as to determine the status of the SCG. Further, if the network side rejects the SCG activating request of the terminal, the terminal may know when to request to activate the SCG again, so as to avoid waste of the network resources.

### BRIEF DESCRIPTION OF THE DRAWINGS

FIG. 1 is a block diagram of a radio communication system which is applicable to the example of this application;
FIG. 2 is a flowchart of a method for controlling a status of an SCG provided in the example of this application;
FIG. 3 is a schematic diagram of an apparatus for controlling a status of an SCG provided in the example of this application; and
FIG. 4 is a schematic diagram of a terminal provided in the example of this application.

### DETAILED DESCRIPTION

The technical solutions in the examples of this application are clearly described in the following with reference to the accompanying drawings in the examples of this application. Apparently, the described examples are merely some, rather than, all of the examples of this application. All other examples obtained by those of ordinary skill in the art based on the examples of this application fall within the protection scope of this application.

The terms "first", "second" and the like in the specification and claims of this application are used to distinguish similar objects, but are not used to describe a specific sequence or order. It should be understood that the terms used in this way are exchangeable in a proper case, so that the examples of this application can be implemented in an order different from the order shown or described herein, and objects distinguished by "first" and "second" are usually of the same category and the number of the objects is not defined. For example, there may be one or more first objects. In addition, "and" in the specification and claims represents at least one of connected objects, and the character "/" usually represents that previous and next associated objects form an "or" relationship.

It is worth noting that the technologies described in the example of this application are not limited to the long term evolution (Long Term Evolution, LTE)/LTE-advanced (LTE-Advanced, LTE-A) system, and may further be applied to other radio communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the example of this application are usually interchangeably used, and the technologies described can be applied to the systems and radio technologies mentioned above, and can also be applied to other systems and radio technologies. For an exemplary purpose, a new radio (New Radio, NR) system is described in the following description, and the term NR is used in most description below. However, these technologies can also be applied to other applications besides the NR system, for example, a 6^{th} generation (6^{th} Generation, 6G) communication system.

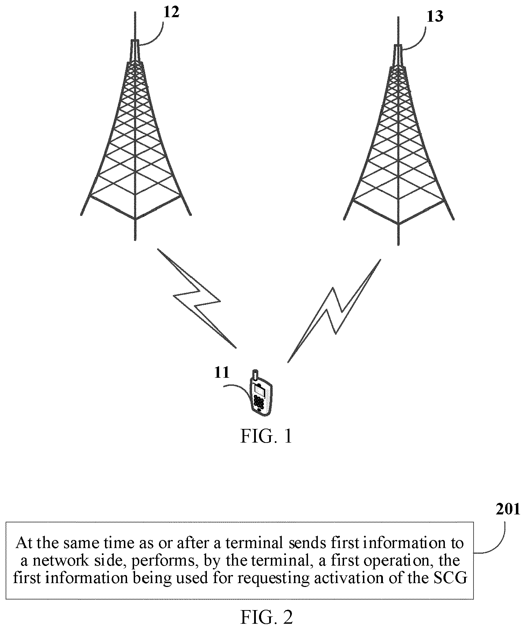

Referring to FIG. 1, it is a block diagram of a radio communication system which can be applied to the example of this application. The radio communication system includes a terminal 11, a network side device 12 and a network side device 13. The terminal 11 may also be known as terminal device or user equipment (User Equipment, UE). The terminal 11 may be terminal side devices, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile person computer (ultra-mobile personal computer, UMPC), a mobile Internet device (Mobile Internet Device, MID), a wearable device (Wearable Device) or vehicle user equipment (Vehicle User Equipment, VUE), and pedestrian user equipment (Pedestrian User Equipment, PUE), the wearable device including: a smart watch, a bracelet, an earphone and eye glasses. It should be noted that the specific type of the terminal 11 is not limited in the example of this application.

The network side device 12 and the network side device 13 may be base stations or core networks, where the base stations can also be known as nodes B, evolution nodes B, access points, base transceiver stations (Base Transceiver Station, BTS), radio base stations, radio transceivers, basic service sets (Basic Service Set, BSS), extended service sets (Extended Service Set, ESS), Nodes B, evolution Nodes B (eNB), household Nodes B, household evolution Nodes B, WLAN access points, WiFi nodes, transmitting receiving points (Transmitting Receiving Point, TRP), radio access network nodes or some other appropriate terms in the field as long as the same technical effect is achieved. The base stations are not limited to the appointed technical vocabularies. It should be noted that the base stations in the NR system are taken as an example only in the example of this application, but the specific type of the base stations is not limited.

To better understand the example of this application, the following technical points will be introduced first below:

### 1. Introduction of dual connectivity and carrier aggregation.

Dual connectivity (Dual Connectivity, DC) provides the UE with resources of two network nodes (network elements of the access network), where one of the network nodes is known as a master node (Master node, MN) and the other one is known as a secondary node (Secondary node, SN). At each network node, carrier aggregation (Carrier Aggregation, CA) is used, i.e., the UE is configured with a series of serving cells, also known as a cell group (cell group) controlled by the node. The cell group controlled by the master node is the master cell group, and the cell group controlled by the secondary node SN is the secondary cell group. Each cell group includes a special cell (Special Cell, SpCell) and a series of secondary cells (Secondary Cell, Scell). The special cell in the MCG is known as the primary cell (Primary Cell, PCell), and the special cell in the SCG is known as the primary secondary cell (Primary Secondary Cell, PSCell). In one cell group, the SpCell uses a master carrier, and other secondary cells use a secondary carrier. Resource scheduling in one cell group is performed by the SpCell.

### 2. Introduction of SCG activating/deactivating mechanism.

A suspended (suspended) status of the SCG is introduced in related art. When the UE performs low data transmission or does not transmit data on the SCG for a very long period of time, the network may suspend the SCG temporarily rather than directly deleting the SCG and then waiting for large data and adding the data back. The method of suspending the SCG temporarily may enable the terminal to work in a more power-saving manner within a long period of time, and meanwhile, when there is a massive data requirement, the SCG may be recovered rapidly. In a standardizing process, a statement of SCG deactivation (deactivation) is used. At present, the UE behaviors, the network control mode and the like are being discussed when the SCG is in the deactivated status, and it may be determined that when SCG is deactivated, the UE does not monitor the PDCCH on the SCG and does not perform PUSCH transmission. For other UE behaviors during SCG, a part of behaviors will be limited, so as to save the power consumption of the UE, and the other part of behaviors may be continuously performed to start data transmission rapidly when the data volume is recovered as soon as possible.

A method and apparatus for controlling a status of an SCG, a device, and a readable storage medium provided in the example of this application are described in detail below in conjunction with drawings through some examples and application scenarios thereof.

Referring to FIG. 2, the example of this application provides a method for controlling a status of an SCG, specifically including the following steps:

Step 201: at the same time as or after a terminal sends first information to a network side, the terminal performs a first operation, the first information being used for requesting activation of the SCG,
where the first operation includes at least one of the following:
(1) a deactivated status of the SCG is kept;
(2) the SCG is set to be in the deactivated status;
(3) scheduling of a secondary node (Secondary Node, SN) is monitored;

Optionally, the monitoring the scheduling of the SN may further include: a PDCCH of at least one serving cell of the SCG is monitored.

Optionally, in a case that signalling radio bearers 3 (signalling radio bearers 3, SRB3) and/or split (split) SRB1 are configured, the scheduling of the SN is monitored.

Optionally, the first information may be sent by the master cell group (Master Cell group, MCG) or the SCG; the first information unnecessarily carries the SCG activating requirement explicitly and may be any information which may assist the network side to decide whether the SCG is activated, for example, a measurement result (measurement of radio resource management (Radio Resource Management, RRM) of the SCG, measurement of channel state information (Channel State Information, CSI) and etc.).
(4) the SCG is activated;
(5) second information sent by the network side is received, the second information being used for responding to the first information;

### The above second information may also be known as a response message,

Optionally, the second information sent by the network side is received from the master cell group (Master Cell group, MCG) SRB1 or SRB3 or split SRB1; or, the second information is received through a message 2 (msg2), a message B (msgB) or a message 4 (msg4) in a random access process; or the second information is sent by the medium access control element (Medium Access Control Element, MAC CE) of the MCG or the SCG; or the second information is sent by the downlink control information (Downlink Control Information, DCI) of the MCG or the SCG,
(6) a first timer is started, where when the first timer is running, the terminal does not send an SCG activating request or the first information; and
   The first timer may also be known as a prohibit timer (prohibit timer).
(7) a second timer is started or restarted, where when the second timer is running, the terminal monitors the scheduling of the SN or sets the SCG to be in an activated status.

An implementation is as follows: the monitoring the scheduling of the SN by the terminal means that the terminal monitors the PDCCH of at least one serving cell of the SCG.

In an implementation of this application, the first information may be carried in a service request (Service Request, SR), a message 1 (Msg1) or a message A (MsgA) in the random access process, but surely is not limited to this.

In an implementation of this application, the method may further include:
in a case that the terminal has received the second information, the terminal performs a second operation,
where the second operation includes at least one of the following:
   (1) that the SCG is set to be in the activated status or the SCG is kept in the activated status; and
   (2) that the SCG is set to be in the deactivated status, the SCG is kept in the deactivated status or the scheduling of the SN is stopped being monitored.

Further, in a case that the second operation includes: setting the SCG to be in the deactivated status, keeping the SCG in the deactivated status, or stopping monitoring the scheduling of the SN, the second operation further includes one or more of the following: a third timer (otherwise known as a wait timer) is started, the third timer being configured to determine, by the terminal, a time when the SCG is requested to be activated; the first timer is topped; and the second timer is stopped.

Optionally, when the third timer is running, the terminal does not send an SCG activating request or the first information.

In an implementation of this application, the second information may include at least one of the following:
(1) an SCG deactivating command;
(2) an SCG activating command;
(3) an acceptance response of the SCG activating request;
(4) a rejection response of the SCG activating request;
(5) an uplink resource of the SCG;
   for example, the uplink resource of at least one serving cell on the configured SCG such as the PUSCH resource;
(6) configuration information of a third timer; and
(7) a downlink resource of the SCG;
   for example, measurement configuration (such as a reference signal resource of the channel state information) of the SCG, the PDCCH resource, the physical downlink share channel (Physical Downlink Share Channel, PDSCH) resource.

In an implementation of this application, the first timer, the second timer or a third timer is configured by the network side or agreed in a protocol.

In an implementation of this application, in a case that the second information indicates that the network side is configured with a value of the third timer, the method may further include:
before or after starting the third timer, the terminal sets the SCG to be in the deactivated status or keeps the SCG in the deactivated status.

In an implementation of this application, the second information is a radio resource control (Radio Resource Control, RRC) message or media access control control element (Media Access Control Control Element, MAC CE), or downlink control information (Downlink Control Information, DCI).

In an implementation of this application, the MAC CE at least includes: a logical channel identifier (logical channel identifier, LCID) field and/or a numerical field, the numerical field including an SCG activating or deactivating indication.

For example, the numerical field is 1 bit, where "0" represents deactivation, and "1" represents activation, or " 1" represents deactivation, and "0" represents activation.

It may be understood that the LCID may also include an extended LCID (eLCID).

In an implementation of this application, after starting the first timer or a third timer, the method further includes:
in a case that a first condition is satisfied, the terminal stops the first timer or the third timer, where the first condition includes at least one of the following:
(1) that the terminal has received the SCG activating indication;
(2) that the terminal has received the acceptance response of the SCG activating request;
(3) that a mobility process occurs to the terminal; and
(4) that a radio link failure (Radio Link Failure, RLF) of a master cell group (Master Cell group, MCG) occurs to the terminal.

In an implementation of this application, after starting the second timer, the method further includes:
in a case that a second condition is satisfied, the terminal stops the second timer,
where the second condition includes at least one of the following:
   (1) that a mobility process occurs to the terminal;
   (2) that an upper layer requests stop of initiating SCG activation; and
   (3) that the second information has been received.

In an implementation of this application, after starting the first timer, the method may further include:
in a case that the first timer expires, the terminal is allowed to initiate the SCG activating request on the SCG.

Exemplarily, in a case that the first timer expires, if the terminal is to send the uplink data on the SCG or the terminal has the suspended uplink data on the SCG, the terminal is allowed to initiate the SCG activating request on the SCG.

In an implementation of this application, after starting the second timer, the method may further include:
in a case that the second timer expires, the terminal performs a third operation,
where the third operation includes one of the following:
   (1) setting the SCG to be in the deactivated status;
   (2) not monitoring the scheduling of the SN;
   (3) releasing an SCG configuration;
   (4) sending, through a MCG, the SCG activating request;
   (5) reporting, through the MCG, SCG failure information, the SCG failure information indicating an SCG activation failure; and
   (6) sending the first information.

In an implementation of this application, after starting a third timer, the method further includes:
in a case that the third timer expires, sending, by the terminal, the SCG activating request, or sending third information to an upper layer, the third information indicating that a status where the SCG activating request is prohibited to send is alleviated.

In an implementation of this application, the method may further include:
in a case that a third condition is satisfied, the terminal sends the first information to the SN,
where the third condition may include one or more of the following:
   (1) that uplink synchronization is kept between the terminal and at least one cell in the SCG;
   (2) that the terminal is configured with a physical uplink control channel (Physical Uplink Control Channel, PUCCH) resource of at least one cell in the SCG; and
   (3) that the terminal is not configured with a physical uplink shared channel (Physical Uplink Shared Channel, PUSCH) resource of the SCG.

In an implementation of this application, the first information carries a cause value activating the SCG.

In the example of this application, the terminal may acquire the response of the network side at the same time as or after the terminal sends the SCG activating request, so as to determine the status of the SCG. Further, if the network side rejects the SCG activating request of the terminal, the terminal may know when to request to activate the SCG again, so as to avoid waste of the network resources.

Implementations of this application will be introduced below in conjunction with Examples Ito VII.

Example I: UE sends a service request to an SN, and a network responds through an RRC message.

Step 1: when an SCG of the UE is in the deactivated status and the SCG needs to be activated (for example, there is uplink data to be sent on the SCG), the UE sends first information to the SN, the first information being allowed to be the service request.

Optionally, the UE may further satisfy the following one or more conditions:
(1) uplink synchronization is kept between the UE and at least one cell (Cell) on the SCG;
   For example, uplink synchronization is kept between the UE and a PSCell.
(2) the UE has a PUCCH resource through which the SCG is configured with at least one cell; and
   For example, the UE has the PUCCH resource of the PSCell.
(3) the UE is not configured with a PUSCH resource on the SCG.

Step 2: at the same time as or after the UE sends the service request, the UE may perform the at least one of following:
(1) the scheduling of the SN is not monitored;
(2) the SCG is kept in the deactivated status; and
(3) in a case that signalling radio bearers 3 (signalling radio bearers 3, SRB3) and/or split (split) SRB1 are configured, the UE monitors the scheduling of the SN or activates the SCG.

Step 3: the UE receives a second message, where the second message may be an RRC message received from MCG SRB1 or SRB3 or split SRB1, for example, an RRC reconfiguration message generated by the MN or SN.

Optionally, the second information may include the at least one of the following:
(1) an activating/deactivating status indication of the SCG;
(2) accepting/rejecting an SCG activating request of the UE; and
(3) an uplink resource of at least one cell on the SCG configured for the UE by a network.

For example, the uplink resource may be the PUSCH resource.

Step 4: according to the second information, the UE may perform the at least one of the following:
(1) the SCG is set to be in the activated status;
(2) the SCG is set to be in the deactivated status;
(3) the SCG is kept in the deactivated status; and
(4) the scheduling of the SN is not stopped being monitored.

Example II: UE sends a service request to an SN, and the SN responds through an MAC CE.

Step 1: when an SCG of the UE is in the deactivated status and the SCG needs to be activated (for example, there is uplink data to be sent on the SCG), the UE sends first information to the SN, the first information being allowed to be the service request.

Optionally, the UE may further satisfy the following one or more conditions:
(1) uplink synchronization is kept between the UE and at least one cell (Cell) on the SCG;
   For example, uplink synchronization is kept between the UE and a primary secondary cell (Primary Secondary Cell, PSCell).
(2) the UE has a PUCCH resource through which the SCG is configured with at least one cell; and
   For example, the UE has the PUCCH resource of the PSCell.
(3) the UE is not configured with a PUSCH resource on the SCG.

Step 2: at the same time as or after the UE sends the service request, the UE starts to monitor the scheduling of the SN or activates the SCG.

Step 3: the UE receives the second message on the SCG, the second message being used for determining, by the UE, the activated or deactivated status of the SCG; the second information includes at least one of the following:
(1) a first MAC CE, the first MAC CE indicating the activated/deactivated status of the SCG or accepting/rejecting the SCG activating request of the UE; and
   Optionally, the first MAC CE at least includes: an LCID field and a numerical field, where the numerical field includes an activating/deactivating indication of the SCG, for example, 1 bit is indicated, "0" indicates deactivation and "1" represents activation.
(2) an uplink resource of at least one cell on the SCG configured for the UE by a network, for example, a dynamic grant (dynamic grant).

Step 4: according to the second information, the UE performs at least one of the following:
(1) if the first information includes the uplink resource or the first MAC CE indicates activation of the SCG, the UE sets the SCG to be in the activated status or keeps the SCG in the activated status; and
(2) if the first MAC CE indicates that the SCG is set to be in the deactivated status, the UE sets or keeps the SCG in the deactivated status or stops monitoring the scheduling of the SN.

Example III: The UE initiates random access to the SN, and the SN responds in the message 2 (Msg2).

Step 1: when the SCG is in the deactivated status and the SCG needs to be activated, the UE initiates random access on the SCG.

Step 2: the UE sends a message 1 (Msg1)/message A (MsgA) to the PSCell on a dedicated random access channel (Random Access Channel, RACH) resource, where the dedicated RACH resource is used by the UE to request to activate the SCG.

Optionally, the UE carries a cause value activating the SCG in the Msg1/MsgA.

Step 3: after the UE sends the Msg1/MsgA, the UE starts to monitor the PDCCH or the PSCell or activates the SCG.

Optionally, if not receiving the response of the network side within a period of time, the UE configures the SCG in the deactivated status or stops monitoring the scheduling of the SN.

Step 4: the UE receives the message 2 (Msg2)/message B (MsgB), the Msg2/MsgB carrying the second information.

Usage of the second information is similar to that in Examples I and II.

Example IV: The UE initiates random access to the SN, and the SN responds in a Msg4.

Step 1: when the SCG is in the deactivated status and the SCG needs to be activated, the UE initiates random access on the SCG.

Step 2: the UE sends the Msg1 to the PSCell; and after the UE sends the Msg1, the UE starts to monitor the PDCCH of the PSCell or activates the SCG.

Optionally, the UE carries a cause value activating the SCG in the Msg1.

Step 3: the UE receives the Msg2, and in the Msg2, the uplink resource is allocated to the UE.

Step 4: the UE sends a buffer status report (Buffer Status Report, BSR) in the Msg3.

Step 5: the UE receives the second information from the Msg4.

Usage of the second information is similar to that in Examples I and II.

Example V: Wait timer (wait timer).

Step 1: when the SCG is in the deactivated status, the UE sends the SCG activating request to the network side.

The way that the UE sends the SCG activating request to the network side includes the ways mentioned in Examples I-IV or may further include that the UE requests the network side to activate the SCG through the MCG.

Step 2: after the UE sends the SCG activating request, the UE has received the second information of the network side through the MCG or the SCG.

When the response message indicates at least one of the following information, the UE starts the wait timer, the wait timer being used for determining, by the UE, the (wait) time requesting activation of the SCG:
(1) the network side rejects the SCG activating request;
(2) the network side indicates the UE to activate the SCG;
(3) the network side indicates the UE to keep the SCG in the deactivated status; and
(4) the network side configures a value of the wait timer.

Optionally, before or after the UE starts the wait timer upon receiving the configuration of the wait timer, the UE configures or keeps the SCG in the deactivated status.

Optionally, the response message may be the RRC message or MAC CE.

Step 3: when the wait timer is running, the UE does not send the SCG activating request or the first information.

When one of the following conditions occurs, the UE stops the wait timer:
(1) the UE receives the SCG activating indication;
(2) the UE receives an acceptance response of the SCG activating request;
(3) a mobility process occurs to the UE; and
   For example, inter master node handover (inter-MN HO), primary secondary cell change (PSCell change), secondary base station change (SN change), SN modification (SN modification), conditional handover (Conditional Handover, CHO) and conditional PSCell change (conditional PSCell change, CPC), for example, if the UE receives a command of being synchronously modified to a target PSCell, the UE stops the wait timer.
(4) MCG RLF occurs to the UE.

Step 4: after the wait timer expires, the UE sends the SCG activating request again, or indicates to the upper layer (upper layer) that a status where the SCG activating request is prohibited to send is alleviated.

It should be noted that when there is no wait timer configured in the response message, the value of the wait timer may also be configured by the network to the UE in advance or a value agreed in a protocol.

Example VI: Prohibit timer (prohibit timer).

Step 1: when the SCG is in the deactivated status, the UE sends the SCG activating request to the network side.

The way that the UE sends the SCG activating request to the network side includes the ways mentioned in Examples I-IV or may further include that the UE requests the network side to activate the SCG through the MCG.

Step 2: after the UE sends the SCG activating request, the UE starts the prohibit timer, where the prohibit timer may be configured by the network to the UE or may be agreed in the protocol.

Step 3: when the prohibit timer is running, the UE does not send the SCG activating request.

One of the following conditions occurs, the UE stops the prohibit timer:
(1) the UE receives the SCG activating indication;
(2) the UE receives an acceptance response of the SCG activating request;
(3) a mobility process occurs to the UE; and
   For example, inter-MN HO, PSCell change, SN change, SN modification, CHO and CPC, for example, if the UE receives a command of being synchronously modified to a target PSCell, the UE stops the prohibit timer.
(4) MCG RLF occurs to the UE.

Step 4: after the prohibit timer expires, if the UE has the uplink data to be sent on the SCG or the UE has the suspended uplink data on the SCG, the UE may initiate the SCG activating request on the SCG.

The prohibit timer may be configured by the network to the UE or may be agreed in the protocol.

Example VII: A second timer, configured to determine, by the UE, a duration waiting for response of the SN.

Step 1: when the SCG is in the deactivated status, the UE sends the SCG activating request to the network side.

The way that the UE sends the SCG activating request to the network side includes the ways mentioned in Examples I-IV or may further include that the UE requests the network side to activate the SCG through the MCG.

Step 2: after the UE sends the SCG activating request, the UE starts the second timer.

The second timer may be configured by the network to the UE or may be agreed in the protocol.

Step 3: when the second timer is running, the UE monitors the scheduling of the SN or sets the SCG to be in an activated status.

When one of the following conditions occurs, the UE stops the second timer:
(1) the UE receives the second information in Examples I-V;
(2) a mobility process occurs to the UE; and
(3) an upper layer requests the RRC to stop initiating SCG activation;

Step 4: in a case that the second timer expires, the UE performs one of the following operations:
(1) the SCG is set to be in the deactivated status;
(2) the scheduling of the SN is not monitored;
(3) an SCG configuration is released;
(4) the MCG sends the SCG activating request; and
(5) the SCG failure information (failure information) is reported through the MCG, where the SCG failure information indicates that the cause (cause) value is SCG activation failure (activation failure).

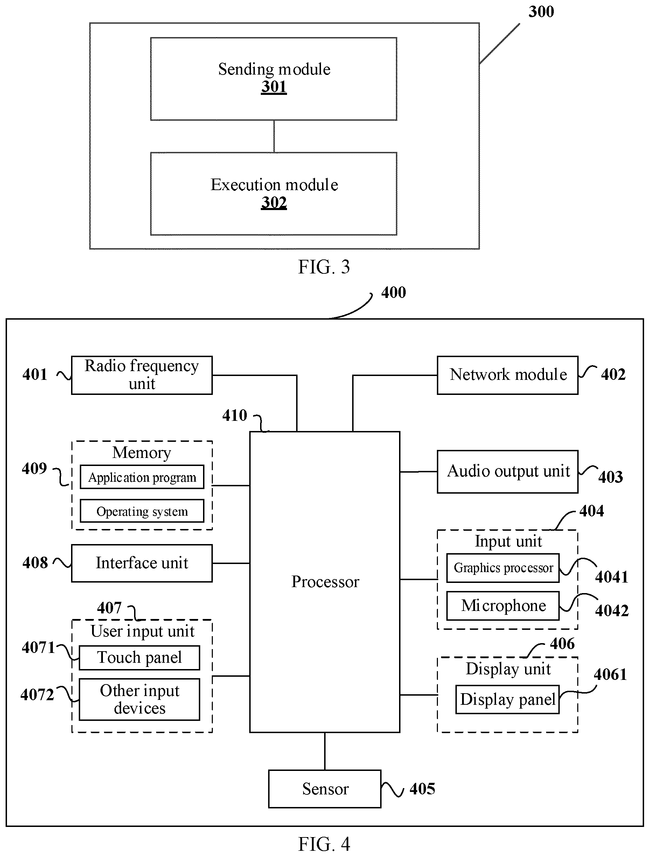

Referring to FIG. 3, the example of this application provides a device for controlling a status of an SCG, applied to a terminal, the device 300 including:
a sending module 301, configured to send first information to a network side; and
an execution module 302, configured to, at the same time as or after the terminal sends first information to a network side, perform a first operation, the first information being used for requesting activation of the SCG,
where the first operation includes at least one of the following:
   (1) a deactivated status of the SCG is kept;
   (2) the SCG is set to be in the deactivated status;
   (3) the scheduling of the SN is monitored;
   (4) the SCG is activated;
   (5) second information sent by the network side is received, the second information being used for responding to the first information;
   (6) a first timer is started, where when the first timer is running, the terminal does not send an SCG activating request or the first information; and
   (7) a second timer is started or restarted, where when the second timer is running, the terminal monitors the scheduling of the SN or sets the SCG to be in an activated status.

In an implementation of this application, the execution module 302 is further configured to: in a case that the terminal has received the second information, perform a second operation,
where the second operation includes one of the following:
(1) that the SCG is set to be in the activated status or the SCG is kept in the activated status; and
(2) that the SCG is set to be in the deactivated status, the SCG is kept in the deactivated status or the scheduling of the SN is stopped being monitored.

Further, in a case that the second operation includes: setting the SCG to be in the deactivated status, keeping the SCG in the deactivated status, or stopping monitoring the scheduling of the SN, the second operation further includes one or more of the following: a third timer (otherwise known as a wait timer) is started, the third timer being configured to determine, by the terminal, a time when the SCG is requested to be activated; the first timer is topped; and the second timer is stopped.

Optionally, when the third timer is running, the terminal does not send an SCG activating request or the first information.

In an implementation of this application, the second information may include at least one of the following:
(1) an SCG deactivating command;
(2) an SCG activating command;
(3) an acceptance response of the SCG activating request;
(4) a rejection response of the SCG activating request;
(5) an uplink resource of the SCG;
   for example, the uplink resource of at least one serving cell on the configured SCG such as the PUSCH resource;
(6) configuration information of a third timer; and
(7) a downlink resource of the SCG.

In an implementation of this application, the first timer, the second timer or a third timer is configured by the network side or agreed in a protocol.

In an implementation of this application, in a case that the second information includes the configuration information of the third timer, the execution module 302 is further configured to:
before or after starting the third timer, set the SCG to be in the deactivated status or keep the SCG in the deactivated status.

In an implementation of this application, the second information is an RRC message or MAC CE or DCI.

In an implementation of this application, the MAC CE at least includes: a LCID field and/or a numerical field, the numerical field including an SCG activating or deactivating indication.

For example, the numerical field is 1 bit, where "0" represents deactivation, and "1" represents activation, or " 1" represents deactivation, and "0" represents activation.

It may be understood that the LCID may also include an eLCID.

In an implementation of this application, after starting the first timer or the third timer, the execution module 302 is further configured to:
in a case that a first condition is satisfied, stop the first timer or the third timer,
where the first condition includes at least one of the following:
   (1) that the terminal has received the SCG activating indication;
   (2) that the terminal has received the acceptance response of the SCG activating request;
   (3) that a mobility process occurs to the terminals; and
   (4) that MCG RLF occurs to the terminal.

In an implementation of this application, after starting the second timer, the execution module 301 is further configured to:
in a case that a second condition is satisfied, stop the second timer,
where the second condition includes at least one of the following:
   (1) that a mobility process occurs to the terminals;
   (2) that an upper layer requests stop of initiating SCG activation; and
   (3) that the second information has been received.

In an implementation of this application, after starting the first timer, the execution module 301 is further configured to:
in a case that the first timer expires, be allowed to initiate the SCG activating request on the SCG.

Exemplarily, in a case that the first timer expires, if the terminal is to send the uplink data on the SCG or the terminal has the suspended uplink data on the SCG, the terminal is allowed to initiate the SCG activating request on the SCG.

In an implementation of this application, after starting the second timer, the execution module 302 is further configured to:
in a case that the second timer expires, perform a third operation, where the third operation includes one of the following:
(1) setting the SCG to be in the deactivated status;
(2) not monitoring the scheduling of the SN;
(3) releasing an SCG configuration;
(4) sending, through a MCG, the SCG activating request;
(5) reporting, through the MCG, SCG failure information, the SCG failure information indicating an SCG activation failure; and
(6) sending the first information.

In an implementation of this application, after starting the third timer, the execution module 302 is further configured to:
in a case that the third timer expires, send the SCG activating request, or send third information to an upper layer, the third information indicating that a status where the SCG activating request is prohibited to send is alleviated.

In an implementation of this application, the execution module 302 is further configured to:
in a case that a third condition is satisfied, send the first information to the SN,
where the third condition may include one or more of the following:
   (1) that uplink synchronization is kept between the terminal and at least one cell in the SCG;
   (2) that the terminal is configured with a PUCCH resource of at least one cell in the SCG; and
   (3) that the terminal is not configured with a PUSCH resource of the SCG.

In an implementation of this application, the first information carries a cause value activating the SCG.

The apparatus provided in the example of this application can implement various processes implemented by the method example shown in FIG. 2 and achieve the same technical effect. To avoid repetition, details are not described herein again.

The apparatus for controlling a status of an SCG in the example of this application may be an apparatus, for example, an apparatus or an electronic device of an operating system, or may be a component, an integrated chip or a chip in the terminal. The apparatus or the electronic device may be a mobile terminal or may be a non-mobile terminal. Exemplarily, the mobile terminal may include, but may not be limited to, the type of the terminal listed above. The non-mobile terminal may be a server, a network attached storage (Network Attached Storage, NAS), a personal computer (personal computer, PC), a television (television, TV), a teller machine, a self-service machine, or the like, and the type is not specifically defined in the example of this application.

The example of this application further provides a terminal, including a processor and a communication interface, where the processor is configured to, at the same time as or after the terminal sends first information to a network side, perform a first operation, the first information being used for requesting activation of the SCG. The terminal example corresponds to the above method example at the terminal side, and various implementation processes and implementations of the above method example are applicable to the terminal example and can achieve the same technical effect.

Specifically, FIG. 4 is a schematic diagram of a hardware structure achieving a terminal in the example of this application, the terminal 400 including, but not limited to, at least part of components such as a radio frequency unit 401, a network module 402, an audio output unit 403, an input unit 404, a sensor 405, a display unit 406, a user input unit 407, an interface unit 408, a memory 409, and a processor 410.

Those in the skill may understand that the terminal 400 may further include a power supply (such as a battery) for supplying power to the components. The power supply may be logically connected to the processor 410 by a power management system, thereby implementing functions such as charging, discharging, and power consumption management by using the power management system. The terminal shown in FIG. 4 does not constitute a limitation on the terminal, and the terminal may include more or fewer components than shown, or combine some components, or have different component arrangements, which are not described herein in detail.

It should be understood that in the example of this application, the input unit 404 may include a graphics processing unit (Graphics Processing Unit, GPU) 4041 and a microphone 4042. The graphics processing unit 4041 performs processing on image data of a static picture or a video that is obtained by an image acquisition apparatus (for example, a camera) in a video acquisition mode or an image acquisition mode. The display unit 406 may include a display panel 4061. The display panel 4061 may be configured in the form of a liquid crystal display, an organic light-emitting diode or the like. The user input unit 407 includes a touch panel 4071 and other input devices 4072. The touch panel 4071 is also known as a touch screen. The touch panel 4071 may include two parts: a touch detection apparatus and a touch controller. The other input devices 4072 may include, but not limited to, a physical keyboard, a functional key (such as a volume control key or a switch key), a track ball, a mouse, and a joystick, which are not described herein in detail.

In the example of this application, after the radio frequency unit 401 receives the downlink data from the network side, the downlink data is sent to the processor 410 for processing; in addition, the uplink data is sent to the network side device. Generally, the radio frequency unit 401 includes, but is not limited to, an antenna, at least one amplifier, a transceiver, a coupler, a low noise amplifier and a duplexer.

The memory 409 may be configured to store a software program or instruction and various data. The memory 409 may mainly include a program or instruction storage area and a data storage area. The program or instruction storage area may store an operating system, an application program or instruction required by at least one function (for example, a sound playback function and an image display function), and the like. In addition, the memory 409 may include a high speed random access memory and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, it may be at least one magnetic disk storage device, a flash memory or other volatile solid-status storage devices.

The processor 410 may include one or more processing units; optionally, the processor 410 may integrate an application processor and a modem processor, where the application processor mainly processes an operating system, a user interface, an application program or instruction, and the like, and the modem processor mainly processes radio communication, for example, a baseband processor. It may be understood that the above modem processor may not be integrated into the processor 410.

The radio frequency unit 401 is configured to send the first information to the network side; and
the processor 410 is configured to, at the same time as or after the terminal sends first information to a network side, perform a first operation, the first information being used for requesting activation of the SCG,
where the first operation includes at least one of the following:
   (1) a deactivated status of the SCG is kept;
   (2) the SCG is set to be in the deactivated status;
   (3) the scheduling of the SN is monitored;
   (4) the SCG is activated;
   (5) second information sent by the network side is received, the second information being used for responding to the first information;
   (6) a first timer is started, where when the first timer is running, the terminal does not send an SCG activating request or the first information; and
   (7) a second timer is started or restarted, where when the second timer is running, the terminal monitors the scheduling of the SN or sets the SCG to be in an activated status.

Optionally, the processor 410 is further configured to, in a case that the terminal has received the second information, perform a second operation,
where the second operation includes one of the following:
(1) that the SCG is set to be in the activated status or the SCG is kept in the activated status; and
(2) that the SCG is set to be in the deactivated status, the SCG is kept in the deactivated status or the scheduling of the SN is stopped being monitored.

Further, in a case that the second operation includes: setting the SCG to be in the deactivated status, keeping the SCG in the deactivated status, or stopping monitoring the scheduling of the SN, the second operation further includes one or more of the following: a third timer (otherwise known as a wait timer) is started, the third timer being configured to determine, by the terminal, a time when the SCG is requested to be activated; the first timer is topped; and the second timer is stopped.

Optionally, when the third timer is running, the terminal does not send an SCG activating request or the first information.

In an implementation of this application, the second information may include at least one of the following:
(1) an SCG deactivating command;
(2) an SCG activating command;
(3) an acceptance response of the SCG activating request;
(4) a rejection response of the SCG activating request;
(5) an uplink resource of the SCG;
   for example, the uplink resource of at least one serving cell on the configured SCG such as the PUSCH resource;
(6) configuration information of a third timer; and
(7) a downlink resource of the SCG.

Optionally, the first timer, the second timer or a third timer is configured by the network side or agreed in a protocol.

Optionally, in a case that the second information includes the configuration information of the third timer, the processor 410 is further configured to:
before or after starting the third timer, set the SCG to be in the deactivated status or keep the SCG in the deactivated status.

In an implementation of this application, the second information is an RRC message or MAC CE or DCI.

In an implementation of this application, the MAC CE at least includes: a LCID field and/or a numerical field, the numerical field including an SCG activating or deactivating indication.

For example, the numerical field is 1 bit, where "0" represents deactivation, and "1" represents activation, or "1" represents deactivation, and "0" represents activation.

It may be understood that the LCID may also include an eLCID.

Optionally, after starting the first timer or the third timer, the processor 410 is further configured to:
in a case that a first condition is satisfied, stop the first timer or the third timer,
where the first condition includes at least one of the following:
   (1) that the terminal has received the SCG activating indication;
   (2) that the terminal has received the acceptance response of the SCG activating request;
   (3) that a mobility process occurs to the terminals; and
   (4) that MCG RLF occurs to the terminal.

Optionally, after starting the second timer, the processor 410 is further configured to:
in a case that a second condition is satisfied, stop the second timer,
where the second condition includes at least one of the following:
   (1) that a mobility process occurs to the terminals;
   (2) that an upper layer requests stop of initiating SCG activation; and
   (3) that the second information has been received.

Optionally, after starting the first timer, the processor 410 is further configured to:
in a case that the first timer expires, be allowed to initiate the SCG activating request on the SCG.

Exemplarily, in a case that the first timer expires, if the terminal is to send the uplink data on the SCG or the terminal has the suspended uplink data on the SCG, the terminal is allowed to initiate the SCG activating request on the SCG.

Optionally, after starting the second timer, the processor 410 is further configured to:
in a case that the second timer expires, perform a third operation, where the third operation includes one of the following:
(1) setting the SCG to be in the deactivated status;
(2) not monitoring the scheduling of the SN;
(3) releasing an SCG configuration;
(4) sending, through a MCG, the SCG activating request;
(5) reporting, through the MCG, SCG failure information, the SCG failure information indicating an SCG activation failure; and
(6) sending the first information.

Optionally, after starting the third timer, the processor 410 is further configured to:
in a case that the third timer expires, send the SCG activating request, or send third information to an upper layer, the third information indicating that a status where the SCG activating request is prohibited to send is alleviated.

Optionally, the processor 410 is further configured to:
in a case that a third condition is satisfied, send the first information to the SN, where the third condition may include one or more of the following:
(1) that uplink synchronization is kept between the terminal and at least one cell in the SCG;
(2) that the terminal is configured with a PUCCH resource of at least one cell in the SCG; and
(3) that the terminal is not configured with a PUSCH resource of the SCG.

The terminal provided in the example of this application can implement various processes implemented by the method example shown in FIG. 2 and achieve the same technical effect. To avoid repetition, details are not described herein again.

The example of this application further provides a program product, where the program product is stored in a non-volatile storage medium, the program product being executed by at least one processor to implement the steps of the processing method as shown in FIG. 2.

The example of this application further provides a readable storage medium. The readable storage medium stores a program or an instruction, where when the program or instruction is executed by a processor, various processes of the method example shown in FIG. 2 are implemented, and the same technical effect can be achieved. To avoid repetition, details are not described herein again.

The processor is a processor in the terminal in the above example. The readable storage medium may include a computer readable storage medium, such as a read-only memory (Read-Only Memory, ROM), a random access memory (Random Access Memory, RAM), a magnetic disk, and an optical disc.

The example of this application further provides a chip is. The chip includes a processor and a communication interface, where the communication interface is coupled to the processor, and the processor is configured to execute a program or an instruction to implement various process of the method example shown in FIG. 2 and can achieve the same technical effect. To avoid repetition, details are not described herein again.

It should be understood that the chip mentioned in the example of this application may also be called a system-level chip, a system chip, a chip system or a system on chip, etc.

It should be noted that the terms "comprise", "include", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one ..." does not exclude that there are still other same elements in the processes, methods, objects, or apparatuses. In addition, it is to be pointed out that the scopes of the method and apparatus in the implementations of this application are not limited and functions are executed according to the illustrated or discussed sequence. The functions may also be executed in a basically simultaneous way or in a reverse sequence based on the functions involved. For example, the described method may be executed according to a sequence different from the described sequence, and various steps may further be added, omitted or combined. In addition, features described in some examples may also be combined in other examples.

According to the descriptions in the above implementations, those skilled in the art may clearly learn that the method in the above example may be implemented by relying on software and a necessary universal hardware platform or by using hardware. Of course, the method may also be implemented by hardware. In most cases, the former is the better implementation. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal device (which may be a mobile phone, a computer, a server, a network device, or the like) to perform the methods described in the examples of this application.

The examples of this application have been described above with reference to the drawings. This application is not limited to the specific examples described above, and the specific examples described above are merely exemplary rather than limitative. Those of ordinary skill in the art may make various variations under the teaching of this application without departing from the spirit of this application and the protection scope of the claims, and such variations shall all fall within the protection scope of this application.

## Claims

1. A method for controlling a status of a secondary cell group SCG, comprising:
at the same time as or after a terminal sends first information to a network side, performing, by the terminal, a first operation, the first information being used for requesting activation of the SCG;
wherein the first operation comprises at least one of the following:
keeping a deactivated status of the SCG;
setting the SCG to be in the deactivated status;
monitoring scheduling of a secondary node SN;
activating the SCG;
receiving second information sent by the network side, the second information being used for responding to the first information;
starting a first timer, wherein when the first timer is running, the terminal does not send an SCG activating request or the first information; and
starting or restarting a second timer, wherein when the second timer is running, the terminal monitors the scheduling of the SN or sets the SCG to be in an activated status.

2. The method according to claim 1, further comprising:
in a case that the terminal has received the second information, performing, by the terminal, a second operation;
wherein the second operation comprises one of the following:
setting the SCG to be in the activated status or keeping the SCG in the activated status; and
setting the SCG to be in the deactivated status, keeping the SCG in the deactivated status or stopping monitoring the scheduling of the SN.

3. The method according to claim 2, wherein in a case that the second operation comprises: setting the SCG to be in the deactivated status, keeping the SCG in the deactivated status, or stopping monitoring the scheduling of the SN, the second operation further comprises one or more of the following: starting a third timer, the third timer being configured to determine, by the terminal, a time when the SCG is requested to be activated; stopping the first timer; and stopping the second timer.

4. The method according to claim 1, wherein the second information comprises at least one of the following:
an SCG deactivating command;
an SCG activating command;
an acceptance response of the SCG activating request;
a rejection response of the SCG activating request;
an uplink resource of the SCG;
a downlink resource of the SCG; and
configuration information of a third timer.

5. The method according to claim 4, wherein in a case that the second information comprises the configuration information of the third timer, the method further comprises:
before or after starting the third timer, setting, by the terminal, the SCG to be in the deactivated status or keeping, by the terminal, the SCG in the deactivated status.

6. The method according to claim 1, wherein the second information is a radio resource control RRC message or a media access control control element MAC CE or downlink control information DCI.

7. The method according to claim 6, wherein the MAC CE at least comprises: a logical channel identifier LCID field and/or a numerical field, the numerical field comprising an SCG activating or deactivating indication.

8. The method according to claim 1 or 2, wherein after starting the first timer or a third timer, the method further comprises:
in a case that a first condition is satisfied, stopping, by the terminal, the first timer or the third timer;
wherein the first condition comprises at least one of the following:
that the terminal has received an SCG activating indication;
that the terminal has received an acceptance response of the SCG activating request;
that a mobility process occurs to the terminal; and
that a radio link failure RLF of a master cell group MCG occurs to the terminal.

9. The method according to claim 1, wherein after starting the second timer, the method further comprises:
in a case that a second condition is satisfied, stopping, by the terminal, the second timer;
wherein the second condition comprises at least one of the following:
that the second information has been received;
that a mobility process occurs to the terminal; and
that an upper layer requests stop of initiating SCG activation.

10. The method according to claim 1, wherein after starting the first timer, the method further comprises:
in a case that the first timer expires, allowing the terminal to initiate the SCG activating request on the SCG.

11. The method according to claim 1, wherein after starting the second timer, the method further comprises:
in a case that the second timer expires, performing, by the terminal, a third operation;
wherein the third operation comprises one of the following:
setting the SCG to be in the deactivated status;
not monitoring the scheduling of the SN;
releasing an SCG configuration;
sending, through a MCG, the SCG activating request;
reporting, through the MCG, SCG failure information, the SCG failure information indicating an SCG activation failure; and
sending the first information.

12. The method according to claim 2, wherein after starting a third timer, the method further comprises:
in a case that the third timer expires, sending, by the terminal, the SCG activating request, or sending third information to an upper layer, the third information indicating that a status where the SCG activating request is prohibited to send is alleviated.

13. The method according to claim 1, further comprising:
in a case that a third condition is satisfied, sending, by the terminal, the first information to the SN;
wherein the third condition comprises one or more of the following:
that uplink synchronization is kept between the terminal and at least one cell in the SCG;
that the terminal is configured with a physical uplink control channel PUCCH resource of at least one cell in the SCG; and
that the terminal is not configured with a physical uplink shared channel PUSCH resource of the SCG.

14. The method according to claim 1, wherein the first information carries a cause value activating the SCG.

15. The method according to claim 1 or 2, wherein the first timer, the second timer or a third timer is configured by the network side or agreed in a protocol.

16. An apparatus for controlling a status of an SCG, applied to a terminal, comprising:
an execution module, configured to, at the same time as or after the terminal sends first information to a network side, perform a first operation, the first information being used for requesting activation of the SCG;
wherein the first operation comprises at least one of the following:
keeping a deactivated status of the SCG;
setting the SCG to be in the deactivated status;
monitoring scheduling of a secondary node SN;
activating the SCG;
receiving second information sent by the network side, the second information being used for responding to the first information;
starting a first timer, wherein when the first timer is running, the terminal does not send an SCG activating request or the first information; and
starting or restarting a second timer, wherein when the second timer is running, the terminal monitors the scheduling of the SN or sets the SCG to be in an activated status.

17. The apparatus according to claim 16, wherein the execution module is further configured to: in a case that the terminal has received the second information, perform a second operation;
wherein the second operation comprises one of the following:
setting the SCG to be in the activated status or keeping the SCG in the activated status; and
setting the SCG to be in the deactivated status, keeping the SCG in the deactivated status or stopping monitoring the scheduling of the SN.

18. The apparatus according to claim 17, wherein in a case that the second operation comprises: setting the SCG to be in the deactivated status, keeping the SCG in the deactivated status, or stopping monitoring the scheduling of the SN, the second operation further comprises one or more of the following: starting a third timer (otherwise known as a wait timer), the third timer being configured to determine, by the terminal, a time when the SCG is requested to be activated; stopping the first timer; and stopping the second timer.

19. The apparatus according to claim 16, wherein in a case that the second information comprises the configuration information of a third timer, the execution module is further configured to:
before or after starting the third timer, set the SCG to be in the deactivated status or keep the SCG in the deactivated status.

20. The apparatus according to claim 16, wherein after starting the first timer or a third timer, the execution module is further configured to:
in a case that a first condition is satisfied, stop the first timer or the third timer;
wherein the first condition comprises at least one of the following:
that the terminal has received an SCG activating indication;
that the terminal has received an acceptance response of the SCG activating request;
that a mobility process occurs to the terminal; and
that MCG RLF occurs to the terminal.

21. The apparatus according to claim 16, wherein after starting the second timer, the execution module is further configured to:
in a case that a second condition is satisfied, stop the second timer,
wherein the second condition comprises at least one of the following:
that the second information has been received;
that a mobility process occurs to the terminal; and
that an upper layer requests stop of initiating SCG activation.

22. The apparatus according to claim 16, wherein after starting the first timer, the execution module is further configured to:
in a case that the first timer expires, be allowed to initiate the SCG activating request on the SCG.

23. The apparatus according to claim 16, wherein after starting the second timer, the execution module is further configured to:
in a case that the second timer expires, perform a third operation;
wherein the third operation comprises one of the following:
setting the SCG to be in the deactivated status;
not monitoring the scheduling of the SN;
releasing an SCG configuration;
sending, through a MCG, the SCG activating request;
reporting, through the MCG, SCG failure information, the SCG failure information indicating an SCG activation failure; and
sending the first information.

24. The apparatus according to claim 16, wherein after starting a third timer, the execution module is further configured to:
in a case that the third timer expires, send the SCG activating request, or send third information to an upper layer, the third information indicating that a status where the SCG activating request is prohibited to send is alleviated.

25. The apparatus according to claim 16, wherein the execution module is further configured to:
in a case that a third condition is satisfied, send the first information to the SN;
wherein the third condition may comprise one or more of the following:
that uplink synchronization is kept between the terminal and at least one cell in the SCG;
that the terminal is configured with a PUCCH resource of at least one cell in the SCG; and
that the terminal is not configured with a PUSCH resource of the SCG.

26. A terminal, comprising: a processor, a memory, and a program stored in the memory and executable on the processor, wherein when the program is executed by the processor, steps of the method according to any one of claims 1 to 15 are implemented.

27. A readable storage medium, storing a program or an instruction, wherein when the program or the instruction is executed by a processor, steps of the method according to any one of claims 1 to 15 are implemented.

28. A chip, comprising a processor and a communication interface, wherein the communication interface is coupled to the processor, and the processor is configured to execute a program or an instruction to implement the steps of the method according to any one of claims 1 to 15.

29. A computer program product, wherein the program product is stored in a non-volatile storage medium, the program product being executed by at least one processor to implement the steps of the method according to any one of claims 1 to 15.

30. A communication device, configured to perform the steps of the method according to any one of claims 1 to 15.
